Europäisches Patentamt

(19) European Patent Office

Office européen des brevets

(11) Veröffentlichungsnummer: **0 210 668**
**B1**

(12) **EUROPÄISCHE PATENTSCHRIFT**

(45) Veröffentlichungstag der Patentschrifft:
21.03.90

(21) Anmeldenummer: 86112963.3

(22) Anmeldetag: 11.04.84

(51) Int. Cl.⁵: **A 61 C 19/04**

(54) Vorrichtung zur Herstellung einer Bissprothese.

(30) Priorität: 12.04.83 DE 3313198

(43) Veröffentlichungstag der Anmeldung:
04.02.87 Patentblatt 87/06

(45) Bekanntmachung des Hinweises auf die Patenterteilung:
21.03.90 Patentblatt 90/12

(84) Bennante Vertragsstaaten:
AT BE CH DE FR GB LI LU NL SE

(86) Entgegenhaltungen:
GB-A-2 066 667
US-A-2 806 284
US-A-2 874 469
US-A-3 130 494
US-A-3 336 670
US-A-3 693 260

(73) Patentinhaber: PUSCHMANN, Johannes
Landshuter Strasse 4
D-8252 Taufkirchen (DE)

(72) Erfinder: PUSCHMANN, Johannes
Landshuter Strasse 4
D-8252 Taufkirchen (DE)

(74) Vertreter: Gustorf, Gerhard, Dipl.-Ing.
Patentanwalt Dipl.-Ing. Gerhard Gustorf Bachstrasse 6 A
D-8300 Landshut (DE)

**Beschreibung**

Die Erfindung betrifft eine Vorrichtung mit einer U-förmig gebogenen Bißgabel zur. Herstellung einer Bißprothese, wobei die Bogenspitze der Bißgabel mit einer parallel zur Bipupillarlinie ausrichtbaren Frontleiste verbunden ist, die an beiden Seiten in je einen Schenkel übergeht, von denen einer eine Maßskala trägt, deren Nullpunkt der Bogenspitze der Bißgabel entspricht.

Zur Herstellung einer Prothese ist es bisher überwiegend üblich, daß der Zahnarzt eine Handbißnahme durchführt, bei der er ohne Zuhilfenahme von Geräten die Zuordnung zwischen dem Unterkiefer und dem Oberkiefer festlegt. Dabei wird im zahnlosen Mund des Patienten eine Schablone mit Wachsbißwällen gefertigt, die die beiden Zahnreihen darstellen. Zur Anfertigung der Prothese werden im Labor des Zahntechnikers die beiden Schablonen am oberen bzw. am unteren Modellträger eines Artikulators befestigt. In der Mehrzahl der Fälle handelt es sich dabei in der Praxis um sogenannte Mittelwertartikulatoren, bei denen die Bißebene festliegt.

Aus der US-A-3 336 670 ist eine Vorrichtung mit einer U-förmigen Bißgabel bekannt, die an einer zylindrischen Stange festgelegt ist, deren beide Enden je einen Schwenkarm tragen, dessen freie Enden an den Kondylenpunkten des Patienten angelegt werden können. Mit Hilfe einer Maßskala auf einem Schwenkarm kann damit der Abstand des Kondylenpunktes von der Bißebene ermittelt werden, wobei dieser Abstand auf dem winklig zur Bißebene verlaufenden Schwenkarm liegt. Die zylindrische Stange trägt einen Winkelmesser zur Bestimmung des Winkels zwischen der Bißebene und der durch die beiden Schwenkarme festgelegten Artikulationsebene.

Gegenstand des deutschen Patentes 3 313 198 ist eine Vorrichtung zum Eingipsen von Kiefermodellen bei der Herstellung von Zahnersatz mit einem Artikulator, der einen unteren Modellträger für eine Unterkieferschablone und einen oberen Modellträger für eine Oberkieferschablone aufweist, wobei der obere Modellträger relativ zum unteren Modellträger um eine horizontale Achse - die Kondylarachse - schwenkbar ist. Um mit Hilfe dieser Vorrichtung Prothesen herstellen zu können, die auf die individuellen Werte eines Patienten abgestimmt sind und dessen Bißebene exakt berücksichtigen, hat diese Vorrichtung ein Gestell mit einer Bodenplatte zum Aufstellen des Artikulators, mit einer Feststelleinrichtung zur Fixierung des Kondylarachse des Artikulators relativ zur Bodenplatte sowie mit einem zur Bodenplatte parallelen Tisch zur Abstützung und Zentrierung der Oberkieferschablone, dessen Oberfläche die Bißebene bestimmt und der bezüglich der Kondylarachse vertikal und sagittal verstellbar ist.

Der Erfindung liegt die Aufgabe zugrunde, dem Zahnartz eine Vorrichtung zur Verfügung zu stellen, mit der er am Patienten die für die Einstellung des Tisches erfoderlichen Daten bestimmen kann.

Diese Aufgabe wird bei einer Vorrichtung nach der eingangs umrissenen Gattung durch die Merkmale des Kennzeichens des Patentanspruchs gelöst.

Die Erfindung wird nachfolgend anhand der Zeichnung näher erläutert.

Er zeigen:

Figur 1 die Seitenansicht eines menschlichen Kopfes zur Darstellung der Bißebene und der Camper'schen Ebene,

Figur 2 den Kopf in Frontansicht zur Darstellung der Bipupillarlinie,

Figur 3 die perspektivische Ansicht eines menschlichen Unterkiefers mit dem zugrhörigen Koordinatensystem,

Figur 4 eine Fraufsicht einer gemäß der Erfindung ausgebildeten Vorrichtung,

Figur 5 die Seitenansicht der Vorrichtung,

Figur 6 die perspektivische Darstellung eines handelsüblichen Mittelwertartikulators,

Figur 7 die perspektivische Darstellung eines Gestells zur Aufnahme eines Artikulators und

Figur 8 in verkleinerter Darstellung die Seitenansicht des Gestells gemäß Figur 7.

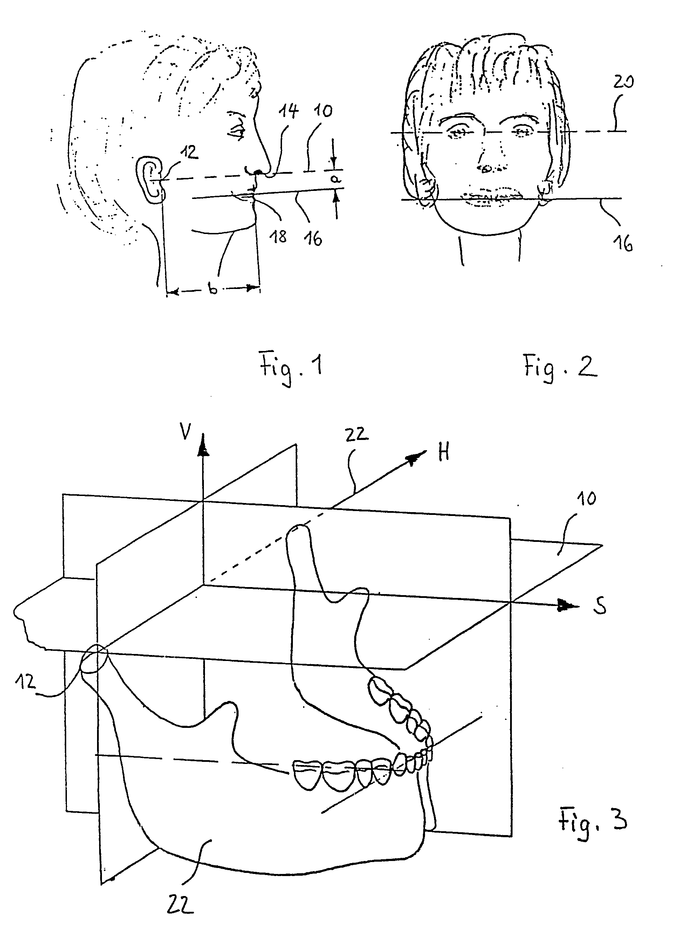

In Figur 1 ist in Seitenansicht ein menschlicher Kopf gezeigt, bei dem die sogenannte Camper'sche Ebene 10 eingezeichnet ist. Diese Camper'sche Ebene 10 ist eine gedachte Ebene, die durch die beiden Kondylenpunkte 12 und den Subnasalpunkt 14 verläuft. Sie ist annähernd parallel zu der Bißebene 16 des Patienten und hat von dieser einen Abstand a.

In Figur 1 ist ferner der Abstand b zwischen dem Kondylenpunkt 12 und der Vorderkante 18 der oberen Zahnreihe bzw. einer Oberkiefer-Bißschablone eingezeichnet.

Aus Figur 2 ergibt sich, daß die Bißebene 16 parallel zur Bipupillarlinie 20 verläuft.

Figur 3 zeigt in perspektivischer Darstellung einen Unterkiefer 22 im dreidimensionalen Koordinatensystem mit der vertikalen Achse V, der horizontalen Achse H und der sagittalen Achse S. Die horizontale Achse H verbindet dabei die beiden Kondylenpunkte 12 und ist somit identisch mit der Kondylarachse 22. Diese liegt in der Camper'schen Ebene 10, welche, wie bereits erwähnt, mit dem Abstand a parallel über der Bißebene liegt.

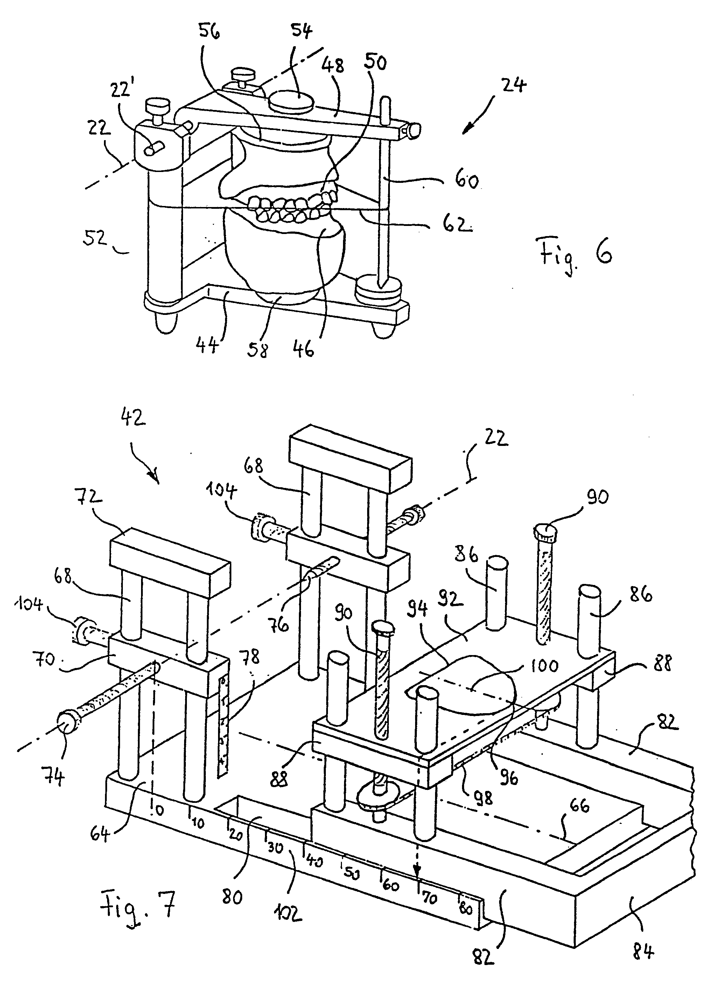

In der Praxis werden Prothesen über eine Handbißnahme und mit Hilfe eines in Figur 6 gezeigten, handelsüblichen Mittelwert-Artikulators 24 hergestellt, wobei auf die in den Figuren 1 und 2 gezeigten Abstände a und b, die bei jedem Patienten verschieden sind, keine Rücksicht genommen wird.

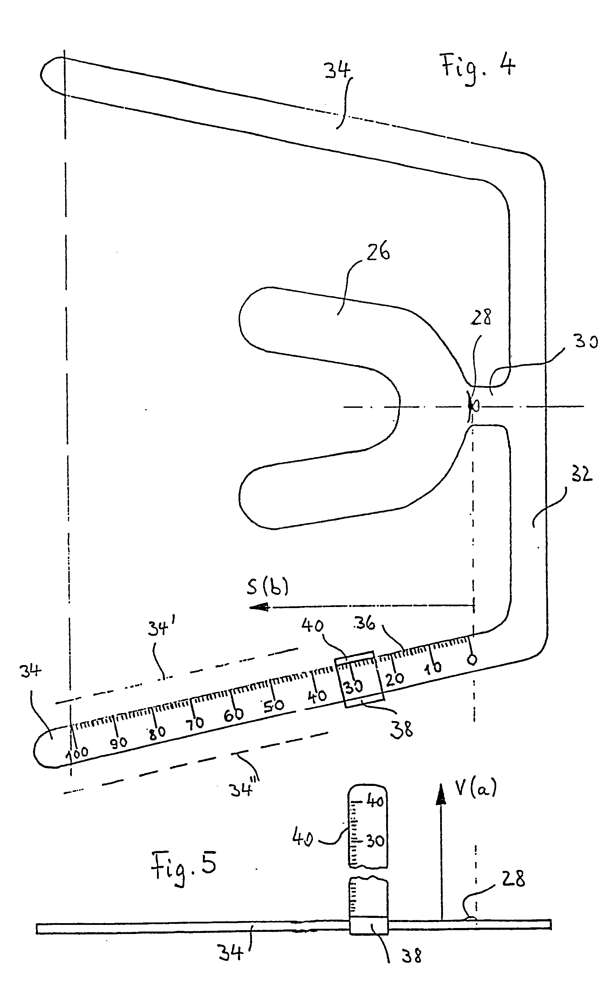

Die Figuren 4 und 5 zeigen eine erfindungsgemäß ausgebildete Bißgabel 26, die U-förmig gebogen ist und an der Bogenspitze eine kleine Erhebung 28 aufweist und über einen Steg 30 mit einer Frontleiste 32 verbunden ist. Die Frontleiste 32 geht an beiden Seiten in je einen Schenkel 34 über. Die beiden Schenkel 34, die Frontleiste 32 und die Bißgabel 26 liegen in einer Ebene.

Entsprechend den unterschiedlichen Kopfformen können verschiedene Größen zur Anwendung kommen, bei denen im Falle eines schmalen Kopfes die beiden Schenkel 34 näher beieinander liegen (gestrichelte Linie 34') als bei einem breiten Kopf (gestrichelte Linie 34").

Wie Figur 4 zeigt, ist erfindungsgemäß vorgesehen, daß ein Schenkel 34 eine Maßskala 36 trägt, deren Nullpunkt der Bogenspitze (Erhebung 28) der Bißgabel 26 entspricht. Wie aus Figur 4 hervorgeht, liegt der Nullpunkt der Maßskala 36 nicht genau lotrecht unter der Bogenspitze, sondern um das Maß versetzt, das den Winkel zwischen dem Schenkel 34 und der Frontleiste 32 berücksichtigt.

Auf dem Schenkel 34 ist ein Schieber 38 verstellbar, der eine vertikal verlaufende Maßskala 40 trägt. Der Nullpunkt dieser Maßskala 40 liegt auf der Oberseite des Schenkels 34.

Zur Bestimmung der in Figur 1 eingezeichneten Abstände a und b am Patient wird die Bißgabel so in den Mund eingesetzt, daß die Erhebung 28 an der Vorderkante der Oberkiefer-Bißschablone in deren Mitte anliegt. Die Oberkiefer-Bißschablone wird am Patienten zu der Camper'schen Ebene 10 parallel gestaltet, wobei die Bißgabel 26 mit ihrer Frontleiste 32 parallel zur Bipupillarlinie 20 ausgerichtet wird.

Mit Hilfe des Schiebers 38 und der darauf befestigten Maßskala 40 kann der Abstand a zur Camper'schen Ebene 10 abgelesen werden; hierzu ist zuvor am Patienten der Kondylenpunkt 12 sichtbar gemacht worden. Gleichzeitig mit dieser Messung wird auf der Maßskala 36 mit Hilfe des Schiebers 38, der bis zum Kondylenpunkt 12 verschoben ist, der Abstand b abgelesen.

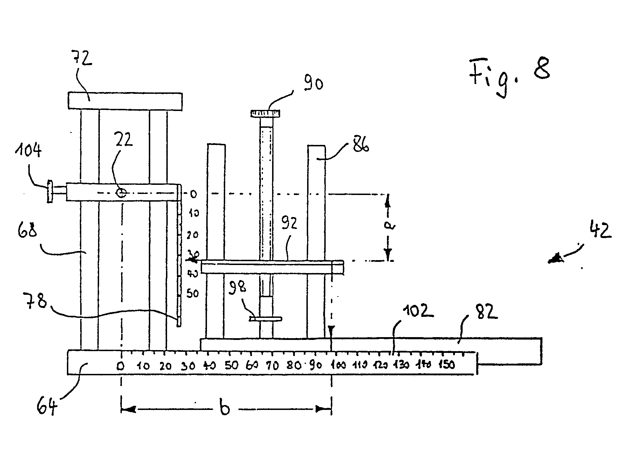

Die Übertragung dieser in Millimeter gemessenen Werte a und b auf den Artikulator 24 erfolgt mit Hilfe des in den Figuren 7 und 8 gezeigten Gestells 42. Bevor dieses näher erläutert wird, seien die Hauptbestandteile des in Figur 6 gezeigten und bekannten Artikulators 24 kurz erwähnt. Der Artikulator 24 hat einen unteren Modellträger 44 für ein Unterkiefermodell 46 sowie einen oberen Modellträger 48 für ein Oberkiefermodell 50. Auf dem unteren Modellträger 44 sind zwei Kondylarsäulen 52 befestigt, zwischen denen der obere Modellträger 48 über die Kondylarachse 22 schwenkbar gelagert ist. Von dieser Kondylarachse 22 ragen zwei Achsstummel 22' seitlich aus den Kondylarsäulen 52 heraus.

Am oberen Modellträger 48 ist mittels einer Halteschraube 54 eine Montierplatte 56 befestigt, an der das Oberkiefermodell 50 festgelegt wird. Entsprechend hat auch der untere Modellträger 44 eine Montierplatte 58 für das Unterkiefermodell 46.

Mit Hilfe eines vertikalen Inzisalstiftes 60 können die beiden Modellträger 44 und 48 parallel zueinander eingestellt werden. Entsprechend den in der Praxis vorkommenden Mittelwerten sind sowohl in den Inzisalstift 60 als auch in die beiden Kondylarsäulen 52 umlaufende Kerben eingearbeitet, in denen ein Gummiband 62 in der Höhe festgelegt wird und dadurch die Lage der Bißebene aufgrund der erwähnten Mittelwerte bestimmt.

Um nun die Bißebene unabhängig von diesen Mittelwerten in Funktion von den patientenbezogenen Abständen a und b einstellen zu können, wird der Artikulator 24 in das Gestell 42 eingesetzt. Dieses Gestell hat eine Bodenplatte 64 mit ebener Oberfläche, in der die sagittal verlaufende Längsmittelachse 66 angegeben ist. Die Bodenplatte 64 trägt an einem Ende an ihren beiden Längsseiten je zwei vertikale Säulen 68, auf denen jeweils ein Schieber 70 vertikal verstellbar geführt ist. An ihren oberen Enden sind die beiden Säulen 68 jedes Paares durch einen Holm 72 miteinander verbunden.

In jeden Schieber 70 ist eine horizontal verlaufende Feststellschraube 74 so eingeschraubt, daß ihre Spitze 76 der gegenüberliegenden Feststellschraube 74 zugewandt ist und zu dieser koaxial verläuft. Durch die beiden Feststellschrauben 74 wird die Kondylarachse 22 bestimmt.

Einer der beiden Schieber 70 trägt eine vertikal verlaufende Skala 78, deren Nullpunkt in der Höhe der Konylarachse 22 liegt.

Wie Figur 7 ferner zeigt, weist die Bodenplatte 64 an ihren beiden Längsseiten in sagittaler Richtung verlaufende Führungen 80 auf, von denen jede einen Schlitten 82 aufnimmt. Die beiden Schlitten 82 sind durch eine Griffleiste 84 fest miteinander verbunden.

Auf jedem Schlitten 82 sind zwei vertikale Säulen 86 befestigt, auf denen ein Schieber 88 mittels einer Einstellspindel 90 vertikal verstellbar ist. Die beiden Einstellspindeln 90 sind über einen Kettentrieb 98 oder dergleichen miteinander verbunden, so daß ein von den Schiebern 88 getragener Tisch 92. der parallel zur Bodenplatte 64 verläuft, immer parallel zu dieser verstellt wird. Die Oberfläche des Tisches 92 weist eine bogenförmige Bezugslinie 94 für das Oberkiefermodell 50 auf, deren vordere Bogenspitze 96 in Tischmitte (sagittale Mittellinie 100) liegt und parallel zur Kondylarachse 22 auf eine Ablesemarke (Pfeil) an einem Schlitten 82 projiziert ist.

An der Längsseite einer Führung 80 befindet sich eine Skala 102, deren Nullpunkt lotrecht unter der Kondylarachse 22 liegt.

Zur Einstellung der patientebezogenen Bißebene 16 wird der handelsübliche Artikulator 24 auf die Bodenplatte 64 des Gestells 42 so gestellt, daß die Kondylarachse 22 (Achsstummel 22') in derselben Vertikalebene liegt wie die Längsmittelachse der beiden Feststellschrauben 74. Sodann werden die beiden Schieber 70 auf den Säulen 68 soweit verschoben, bis die Kondylarachse 22 des Artikulators 24 mit der Längsmittelachse der beiden Feststellschrauben 74 zusammenfällt. In dieser Stellung werden die beiden Schieber 70 durch Feststellschrauben 104 fixiert. Anschließend werden die beiden Feststellschrauben 74 soweit eingeschraubt, bis ihre Spitzen 76 die Achsstummel 22' des Artikulators 24 erfassen und damit die Kondylarachse 22 fixieren. Dabei ist darauf zu achten, daß der Artikulator 24 bezüglich der Längsmittelachse 66 der Bodenplatte 64 zentrisch ausgerichtet ist.

Anschließend wird der Tisch 92 über die in den beiden Führungen 80 verschiebbaren Schlitten 82 so nahe an die Skala 78 verfahren, daß an dieser Skala 78 der Abstand a der Oberfläche des Tisches 92 eingestellt werden kann. Zur Verstellung der Tischhöhe dienen die beiden durch den Kettentrieb 98 miteinander gekoppelten Einstellspindeln 90.

Nachdem nun der vertikale Abstand a der Bißebene 16 von der Camper'schen Ebene 10 festliegt, wird, wie Figur 8 weiter zeigt, der Tisch 92 so weit verschoben, bis die Bogenspitze 96 der Bezugslinie 94 den zuvor ermittelten Abstand b von der Kondylarachse 22 hat. Dieser Abstand b kann über den Pfeil auf dem einen Schlitten 82 an der Skala 102 eingestellt werden.

Damit liegen die beiden individuellen Werte a und b fest. Im Anschluß daran kann die Oberkieferschablone des Patienten entsprechend der Bezugslinie 94 auf der Oberfläche des Tisches 92 zentriert werden. Danach wird auf der Oberkiefer schablone der Funktionsabdruck mit Gips in bekannter Weise am oberen Modellträger 48 des Artikulators 24 befestigt.

Damit ist eine sehr genaue und für jeden Patienten individuelle Position der Oberkieferschablone eingestellt, so daß aufgrund dieser Position die Vollprothese oder auch eine Teilprothese angefertigt werden kann. Die parallele Lage von Tisch 92 und Bodenplatte 64 gewährleisten dabei ein paralleles Eingipsen im Artikulator 24.

Die Zuordnung des Unterkiefers zum Oberkiefer kann dann in bekannter Weise erfolgen und wird hier daher nicht weiter erläutert.

## Patentanspruch

Vorrichtung mit einer U-förmig gebogenen Bißgabel (26) zur Herstellung einer Bißprothese, wobei die Bogenspitze der Bißgabel (26) mit einer parallel zur Bipupillarlinie (20) ausrichtbaren Frontleiste (32) verbunden ist, die an beiden Seiten in je einen Schenkel (34) übergeht, von denen einer eine Maßskala (36) trägt, deren Nullpunkt der Bogenspitze (28) der Bißgabel (26) entspricht, dadurch gekennzeichnet, daß die beiden Schenkel (34) parallel zur Camperschen Ebene (10) ausrichtbar sind und daß auf einem Schenkel (34) ein Schieber (38) verstellbar ist, der eine vertikal verlaufende Maßskala (40) trägt, deren Nullpunkt auf der Oberseite des Schenkels (34) liegt.

## Claim

Device for the manufacture of a dental prosthesis, comprising a U-shaped bite fork (26) whose arcuate vertex is connected to a front bar (32) adapted to be aligned perpendicular to the bipupillary line (20) and which is integral with a pair of side arms (34) one of which carries a measuring scale (36), whose zero point corresponds to the arcuate vertex (28) of said bite fork (26), characterized in that both side arms (34) are adapted to be aligned parallel to the camper's plane (10) and that on one of said side arms (34) is displaceably mounted a slide (38) which carries a vertically extending measuring scale (40), whose zero point lies on the upper side of said side arm (34).

## Revendication

Dispositif pour la fabrication d'une prothèse dentaire, comportant une fourche de mastication (26) arquée en forme de U, dont la pointe de l'arc est reliée à une tringle frontale (32) pouvant être alignée parallèlement à la ligne bi-pupillaire (20), tringle frontale (32) qui se raccorde des deux côtés à une branche (34), l'une des deux porte une échelle graduée (36) dont le point zéro correspond à la pointe de l'arc (28) de la fourche de mastication (26), caractérisé par le fait que les deux branches (34) peuvent être alignées parallèlement au plan de Camper (10) et qu'une branche (34) porte un coulisseau (38) mobile qui porte une échelle graduée (40) s'étendant verticalement dont le point zéro est situé sur le côté supérieur de la branche (34).

Fig. 1

Fig. 2

Fig. 3

Fig. 4

34

26

28

30

32

S(b)

34'

40

36

34

38

34"

V(a)

40

40

30

Fig. 5

34'

38

28

Fig. 6

Fig. 7

5

Fig. 8